Europäisches Patentamt

European Patent Office

Office européen des brevets

(19)

(11) Numéro de publication : **0 390 691 B1**

## (12) FASCICULE DE BREVET EUROPEEN

(45) Date de publication du fascicule du brevet :
**02.09.92 Bulletin 92/36**

(51) Int. Cl.$^5$ : **A01B 15/00**

(21) Numéro de dépôt : **90400863.8**

(22) Date de dépôt : **29.03.90**

(54) **Support à roue de charrue brabant, pour le travail et le transport.**

(30) Priorité : **30.03.89 FR 8904437**

(43) Date de publication de la demande :
**03.10.90 Bulletin 90/40**

(45) Mention de la délivrance du brevet :
**02.09.92 Bulletin 92/36**

(84) Etats contractants désignés :
**AT BE CH DE DK ES FR GB GR IT LI LU NL SE**

(56) Documents cités :
**FR-A- 2 302 667**
**FR-A- 2 326 847**

(73) Titulaire : **CHARRUES NAUD Société Anonyme dite:**
**Route Départementale 752 Andreze**
**F-49600 Beaupreau (FR)**

(72) Inventeur : **Naud, Georges**
**57, Rue Saint-Renan**
**F-49300 Cholet (FR)**

(74) Mandataire : **Phélip, Bruno et al**
**c/o Cabinet Harlé & Phélip 21, rue de La Rochefoucauld**
**F-75009 Paris (FR)**

EP 0 390 691 B1

Jouve, 18, rue Saint-Denis, 75001 PARIS

# Description

La présente invention concerne les roues pour charrues brabant, disposées généralement a l'arrière du bâti, derrière le dernier corps.

L'invention concerne plus particulièrement les supports à roue qui permettent d'utiliser la roue pour le transport et pour les deux positions de travail de la charrue brabant.

Un tel support à roue est notamment décrit dans le document (LEMKEN) FR-A-2.302.667. Dans ce document, la roue est soutenue par un bras relié au bâti de la charrue. Le bras et la roue pivotent autour d'une articulation constituée d'un axe appelé axe de pivotement et situé dans le plan médian du bâti de la charrue, sensiblement perpendiculaire au sens d'avancement. La roue, soutenue par cet axe de pivotement, peut ainsi se positionner automatiquement, par gravité, en position de travail lors de chaque opération de retournement de la charrue. Un deuxième axe est interposé entre le premier axe et la roue, sécant avec ce premier axe et permettant de manoeuvrer la roue pour positionner son plan médian (celui qui est perpendiculaire à son axe de rotation) parallèlement au premier axe de pivotement. Ce second axe, dénommé axe de manoeuvre, permet de faire passer la roue de la position travail à la position transport et inversement.

Dans le document précité, il se trouve qu'en position transport, la roue est décalée latéralement par rapport à l'axe de pivotement. Cette disposition constructive présente l'inconvénient d'introduire un phénomène de lacet au niveau de la partie arrière de la charrue, ce qui la rend désagréable en traction.

Pour supprimer les oscillations de la roue porteuse, et faire passer, de façon classique, son plan médian par l'axe de pivotement, il a été proposé, dans le document (RABEWERK) FR-A-2.326.847, de positionner l'axe de manoeuvre latéralement, par rapport à l'axe de pivotement, de façon que la distance entre les deux axes soit égale à la distance qui sépare le plan médian de la roue de cet axe de manoeuvre.

Ces systèmes de roue précités conviennent plus particulièrement pour des roues de terrage fixées sur un bras qui, en position de travail, est incliné vers l'arrière, en appui sur une butée réglable qui conditionne le terrage.

Dans le cas des systèmes de roues de terrage dont le bras est verrouillé dans une position sensiblement verticale, en position de travail, il est nécessaire de décaler latéralement la roue, au-delà du gabarit de son support, pour pouvoir régler le terrage de la charrue. Le bras qui supporte la roue, et qui, en position de travail, est sensiblement vertical, est guidé dans un manchon muni de moyens appropriés pour permettre le réglage en hauteur de la roue, par rapport au bâti ; ce manchon se situe sensiblement au niveau de l'axe de pivotement ; l'axe longitudinal de ce manchon, et du bras, est sécant et perpendiculaire à l'axe de pivotement, en position normale de travail ; dans cette position, la roue se situe en-dehors du champ du support.

L'invention propose, pour ce système de roue à bras maintenu sensiblement en position verticale en position de travail, un support qui permet le passage de la roue de la position travail à la position transport et inversement.

Le support selon l'invention, comporte un bras muni de moyens pour régler la position de la roue en profondeur par rapport au bâti de la charrue, et qui est verrouillable verticalement dans les deux positions de travail ; ce bras solidaire de la roue, pivote autour d'un axe dénommé axe de pivotement, monté sur ledit bâti et disposé dans le plan médian, sensiblement perpendiculaire au sens d'avancement, et il est verrouillable également dans deux positions distinctes, l'une pour le travail, l'autre pour le transport, par un mouvement autour d'un axe de manoeuvre de la roue qui est, en position de travail, perpendiculaire et sécant audit axe de pivotement ; ce support est caractérisé en ce qu'il comporte, interposés entre l'axe de pivotement et l'axe de manoeuvre, des moyens de déport dudit axe de manoeuvre, pour l'amener à une distance de l'axe de pivotement qui est sensiblement égale à la distance qui le sépare du plan médian de la roue.

Selon une disposition préférentielle de l'invention, les moyens de déport sont constitués d'un second axe de manoeuvre de la roue qui permet un pivotement d'un quart de tour du bras, entre deux positions verrouillées correspondant pour l'une à la position de travail et, pour l'autre, à la position transport ; ce second axe de manoeuvre est situé dans un plan perpendiculaire à l'axe de pivotement, et la somme des distances qui le séparent dudit axe de pivotement d'une part et du premier axe de manoeuvre d'autre part, est égale à la distance qui sépare le plan médian de la roue dudit premier axe de manoeuvre.

Selon une autre disposition préférentielle de l'invention, la projection du premier axe de manoeuvre sur le plan du deuxième axe, plan perpendiculaire à l'axe de pivotement, est incliné par rapport audit deuxième axe d'un angle compris entre 0 et 45° pour donner une chasse à la roue.

Toujours selon l'invention, le support comporte des moyens de verrouillage de la roue dans deux positions opposées, à 180°, autour du premier axe de manoeuvre ; l'une des positions correspondant à la position normale de travail avec la roue située à l'extérieur du champ du support, l'autre correspondant à une position intermédiaire en vue de la mise en position transport, la roue étant située dans l'encombrement dudit support.

Toujours selon l'invention, le support comporte, à l'extrémité inférieure du bras, un moyeu solidaire de la fusée de la roue, articulé autour du premier axe de manoeuvre, qui correspond à l'axe longitudinal dudit bras, ce moyeu étant muni de moyens de verrouillage de sa position par rapport audit bras.

Selon une autre disposition de l'invention, le support comporte un moyeu disposé au niveau de l'axe de pivotement, coopérant avec un bras de forme cylindrique centré sur le premier axe de manoeuvre ; lequel moyeu assure le pivotement de la roue autour dudit premier axe et le réglage du terrage de cette roue ; des moyens complémentaires de verrouillage sont interposés entre le moyeu et le bras.

L'invention sera encore illustrée à l'aide de la description suivante et des dessins annexés, donnés à titre indicatif, et dans lesquels :

– la figure 1 est une vue schématique en perspective d'un premier mode de réalisation de l'invention,

– la figure 2 illustre, selon un schéma fonctionnel, le mode de réalisation de la figure 1,

– la figure 3 illustre, sous forme de schéma fonctionnel, vus de dessus, trois modes de réalisation possibles de l'invention ; la figure 3A correspondant à la vue de dessus du schéma fonctionnel de la figure 2,

– la figure 4 illustre, sous la forme d'un schéma fonctionnel simplifié, un autre mode de réalisation de l'invention avec l'obtention d'une chasse,

– la figure 5 est une vue schématique, en perspective d'un second mode de rélisation du support à roue, représenté en position transport,

– la figure 6 est une vue de face du support seul, en position normale de transport,

– la figure 7 est une vue de dessous de ce support, en position transport.

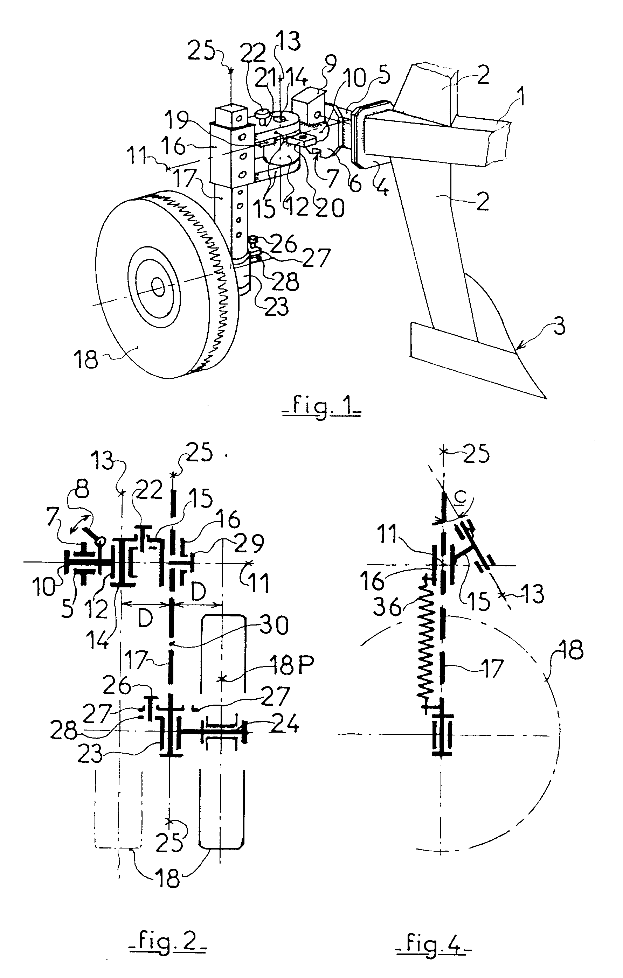

Telle que représentée figure 1, la charrue comporte un bâti 1 sur lequel sont montés des ages 2 munis de socs 3.

L'extrémité arrière du bâti 1 comporte une platine 4 qui reçoit le support à roue selon l'invention. Ce support comprend tout d'abord un corps 5 fixé sur la platine 4. Ce corps 5 est en forme de poutre de section rectangulaire par exemple ; il est muni, du côté de la roue, d'une plaque de verrouillage 6 comportant deux échancrures 7 disposées symétriquement par rapport au plan médian du bâti. Ces échancrures 7 sont destinées à coopérer avec un loquet 8 qui apparaît figure 2, et qui est positionné et articulé dans un boîtier de protection 9. Ce loquet 8 constitue le système de verrouillage en position verticale du bras de la roue dont il sera question plus loin.

Le corps 5 reçoit un arbre 10 centré sur un premier axe 11 dénommé ci-après axe de pivotement. Cet arbre 10 est immobilisé en translation de façon appropriée par rapport au corps 5. Il s'étend, du côté de la plaque de verrouillage 6, jusqu'à une douille 12 centrée sur un autre axe 13.

L'axe de pivotement 11 est situé dans le plan médian du bâti 1 de la charrue, et il est sensiblement perpendiculaire au sens d'avancement de la charrue. En position travail, le plan médian de la charrue est sensiblement horizontal ; en position transport ce plan médian est vertical.

Les axes 11 et 13 sont sécants et perpendiculaires l'un par rapport à l'autre.

On remarque, figures 1 et 2, que le boîtier 9 du loquet 8, est solidaire de l'arbre 10, soudé sur cet arbre entre la plaque de verrouillage 6 et la douille 12. Cette douille 12 assure le guidage d'un pivot 14, centré sur l'axe 13. Ce pivot 14 comporte, à l'une au moins de ses extrémités, une platine 15 qui le relie à un fourreau 16 de section carrée, sur les figures, lequel fourreau assure le guidage et le verrouillage du bras 17 qui supporte la roue 18. Le fourreau 16 se situe à la hauteur de l'axe de pivotement 11, sensiblement centré sur cet axe 11.

On remarque, figure 1, que la douille 12 comporte à sa partie supérieure, deux ergots 19 et 20 disposés à 90° l'un par rapport à l'autre, et muni chacun d'un orifice coopérant avec un orifice 21 disposé dans la platine supérieure 15 pour obtenir un verrouillage au moyen d'une cheville 22 appropriée.

L'ergot 19 est utilisé pour le verrouillage dans les deux positions de travail d'une charrue réversible ; l'ergot 20 est utilisé pour le verrouillage du bras de la roue lors de la mise en position transport.

Sur la figure 1, le fourreau 16 de guidage du bras 17 est relié à la douille 12 au moyen de deux platines 15 solidaires de chacune des extrémités du pivot 14. Sur le schéma fonctionnel de la figure 2, une seule platine 15 a été représentée, solidaire de la partie supérieure du pivot 14.

On remarque, sur les figures 1 et 2, que l'axe de manoeuvre 13 est parallèle au bras 17 qui supporte la roue 18.

A la partie inférieure du bras 17, on a représenté un moyeu 23 sur lequel est montée la fusée 24 de la roue 18. Ce moyeu 23 est articulé sur l'extrémité inférieure du bras 17, autour d'un axe sensiblement vertical 25 qui correspond à l'axe principal longitudinal dudit bras 17. Ce moyeu 23 est immobilisé en translation de façon appropriée, par rapport au bras 17. Il est verrouillé dans deux positions opposées l'une par rapport à l'autre, de 180° par rapport à l'axe 25, au moyen d'une cheville 26 ancrée entre une patte 27 solidaire de la partie inférieure du bras 17 et une patte 28 solidaire du moyeu 23. L'extrémité inférieure du bras 17 comporte deux pattes 27 disposées symétriquement de part et d'autre de l'axe 25 dudit bras 17, et elles comportent chacune des orifices coopérant avec la cheville 26.

Le retournement de la roue, autour de l'axe 25, permet de faire passer la roue 18 de la position travail à la position transport, en vue de placer son plan médian dans l'axe de pivotement 11. En effet, on remarque, figure 2, que la distance $\underline{D}$ entre l'axe 25 du bras 17 et le plan médian 18P de la roue 18 est égale à la distance entre ledit axe 25 et l'axe 13. Ainsi, lorsque la roue 18, est retournée autour de l'axe 25 que l'on peut qualifier de premier axe de manoeuvre, de la position normale de travail à une position en vue de son transport, le plan médian 18P vient en concordance avec l'axe 13. La mise en position transport de la roue n'est achevée que par une rotation de la roue, autour de l'axe 13, que l'on peut qualifier de second axe de manoeuvre, laquelle rotation correspond à une rotation du plan médian 18P de la roue autour de cet axe 13. Le plan médian 18P de la roue, qui, en position travail est perpendiculaire à l'axe de pivotement 11, se positionne, en position transport, de façon à contenir cet axe de pivotement 11, pour obtenir une bonne stabilité de la roue dans sa position transport, et ainsi supprimer les effets nuisibles de lacet.

On remarque, figure 2, que la roue 18 en position transport est située totalement en-dehors de l'encombrement, ou champ, du support. Dans la position normale de travail, cette roue 18 peut être réglée en hauteur en faisant coulisser le tube 17 dans le fourreau 16 et en le verrouillant dans une position déterminée au moyen de la cheville 29 qui pénètre dans des orifices appropriés 30 du fourreau 16 et du bras 17.

Dans sa position intermédiaire entre la position travail et la position transport, comme esquissé figure 2, on remarque que la roue 18 se situe dans l'encombrement, ou champ, de son support, entre le bras 17 et le corps 5 qui relie le support au bâti de la charrue. Dans cette position, le bras 17 doit être réglé par rapport au fourreau 16 pour éviter toute interférence de la roue 18 avec le support.

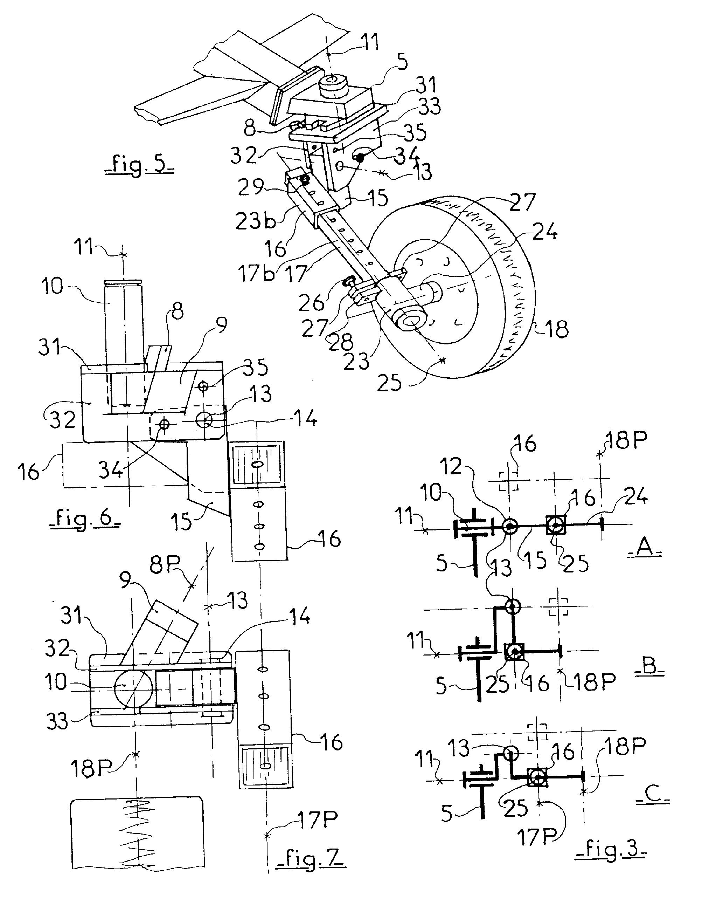

On a représenté, figure 3, trois modes de réalisation, schématiquement, en vue de dessus. La figure 3A correspond à une vue de dessus simplifiée, de la figure 2. On remarque tout d'abord le corps 5 sur lequel est fixé le support. Ce corps 5 reçoit l'arbre 10 centré sur l'axe de pivotement 11. L'arbre 10 soutient une douille 12 centrée sur l'axe 13. Sur cet axe 13 est centré également le pivot 14, figure 2, sur lequel est fixée la platine 15 solidaire du fourreau 16. Ce fourreau 16 soutient et permet le réglage de la roue dont on a fait apparaître la fusée 24 et le plan médian 18P. Le déplacement latéral du fourreau 16 s'effectue par pivotement autour de l'axe 13, selon un quart de tour, pour amener ce fourreau 16 dans la position représentée en traits mixtes fins sur la figure 3A.

Les figures 3B et 3C représentent deux autres modes de réalisation dans lesquels le fourreau 16 est décalé latéralement par rapport à l'axe de pivotement 11 au moyen d'un pivotement d'un quart de tour autour de l'axe 13 qui est, pour ces deux cas, situé dans une position différente de celle représentée figure 3A.

Figure 3A, l'axe 13 est sécant avec l'axe de pivotement 11, comme représenté figures 1 et 2 également.

Sur la figure 3B l'axe 13 est décalé latéralement par rapport à l'axe de pivotement 11 ; il se situe à une distance de cet axe de pivotement 11 égale à la distance qui sépare l'axe 25 du bras 17 du plan médian 18P de la roue 18.

Cette configuration permet, comme il apparaît sur la figure, de positionner le fourreau 16, dans la position de travail, tout près du corps 5 sur lequel est fixé le support. Par cette disposition, le plan médian 18P se trouve rapproché du corps 5, ce qui réduit de façon notable le porte-à-faux de la roue par rapport au bâti de la charrue. L'axe 13 se situe à une distance de l'axe de pivotement 11, qui est égale à la distance entre l'axe 25 et le plan médian 18P de la roue 18.

Toujours sur cette figure 3B, on remarque la position du fourreau 16 après son pivotement d'un quart de tour autour de l'axe 13. Le fourreau 16 est éloigné du corps 5 ce qui présente l'avantage d'éviter toute interférence entre ce fourreau et le corps 5 lui-même ou les structures avoisinantes.

La figure 3C représente un mode de réalisation intermédiaire, dans lequel l'axe 13 se situe sensiblement a mi-distance de l'axe 11 et du plan 17P lorsque ce dernier est parallèle audit axe 11. La distance entre l'axe 13 et l'axe 17P dans sa position normale de travail, ajoutée a la distance entre l'axe 13 et l'axe 11, correspond à la distance entre le plan 17P et le plan médian 18P. Cette caractéristique permet de positionner le fourreau 16 comme représenté en traits fins, à une distance de l'axe de pivotement 11 égale à la distance qui sépare les plans 17P et 18P.

On a représenté, figure 4, schématiquement, et en vue de face, des éléments du support de la roue 18 lorsqu'elle est en position normale de travail. Cette figure 4 montre l'axe 25 du bras vertical 17, qui est sécant et perpendiculaire à l'axe de pivotement 11. L'axe 13 est représenté décalé à droite et incliné par rapport à l'axe 25. L'inclinaison de l'axe 13, par rapport à l'axe 25 a pour effet de donner, en position transport, une chasse à la roue 18, c'est-à-dire d'introduire une distance entre la projection sur le sol de l'axe de pivotement 11 et le point de contact de la roue avec ce sol. Cet angle d'inclinaison C de l'ordre de 20 à 45° est valable dans tous les cas représentés figures 3A, 3B et 3C.

Cet angle C conditionne également la garde au sol du support et en particulier du fourreau 16 ; cette garde au sol est également influencée par l'inclinaison de l'axe 11, par rapport au sol, en position transport.

On a représenté, figure 5, la partie arrière de la charrue avec son support à roue en position transport. On remarque, dans cette position, que l'axe de pivotement 11, situé dans le plan médian du bâti de la charrue est légèrement incliné vers l'avant ; le plan médian de la charrue est sensiblement vertical.

En position de transport, le loquet 8 est dégagé des échancrures 7 de la plaque de verrouillage 6. La roue peut pivoter librement autour de l'axe 11. On remarque, sur cette figure 5, un second mode de réalisation du support.

Ce support est représenté plus en détail et seul, figure 6 et figure 7. Ce support comporte un arbre 10 centré sur l'axe 11 de pivotement. Cet arbre 10 est guidé dans le corps 5 et immobilisé en translation de façon appropriée. Cet arbre 10 traverse une plaque 31, perpendiculaire à l'axe 11, sur laquelle il est fixé. Cette plaque est en appui sur la plaque de verrouillage 6 qui comporte les échancrures 7. Derrière cette plaque 31, on trouve une chape constituée d'une aile 32 et d'une aile 33, séparées par l'arbre 10.

On remarque, soudé sur l'aile 32, le boîtier de protection 9 du loquet 8.

Le pivot 14 se situe entre les deux ailes 32 et 33. Le fourreau 16 est solidaire de la platine 15 qui est elle-même solidaire du pivot 14 et articulée autour de l'axe 13. Le fourreau 16 est soudé en oblique sur la platine 15 pour former, avec l'axe 13, un angle de l'ordre de 20 à 45°, visible figure 4, et obtenir une chasse, au niveau de la roue 18, en position transport. Cet angle d'inclinaison entre le fourreau 16 et l'axe 13 se retrouve, figure 7, entre l'axe 13 et l'axe ou plan médian 8P du loquet 8. En effet, lorsqu'il est en position travail, c'est-à-dire dans la position esquissée en traits mixtes fins figure 6, le fourreau 16 se centre dans le plan 8P.

Dans l'exemple représenté figure 6, on remarque que la platine 15 comporte un retour en équerre qui permet un verrouillage dans deux positions à 90° l'une par rapport à l'autre : pour la position transport au moyen des orifices 34 et, pour la position travail, au moyen des orifices 35. Ces orifices 34 et 35 sont percés dans les ailes 32 et 33 ; ils correspondent à ceux des pattes 20 et 19 respectivement, montrés figure 1.

On remarque aussi, sur la figure 5, entre la roue 18 et l'axe 11, le moyeu 23 qui soutient la fusée 24. Ce moyeu 23 est ancré à la partie inférieure du bras 17, centré sur l'axe 25 dudit bras 17. Ce moyeu 23 est verrouillé par rapport au bras 17 au moyen d'une cheville 26. La partie inférieure du bras 17 comporte à cet effet deux pattes 27 diamétralement opposées et le moyeu 23 comporte une patte 28 disposée à l'opposé de la roue par rapport audit moyeu 23.

On peut aussi faire remarquer que le demi-tour que l'on fait subir à la roue, autour du premier axe de manoeuvre 25, peut être obtenu par un démontage du bras 17 par rapport au fourreau 16 dans lequel il est normalement verrouillé au moyen de la cheville 29, et un retournement de ce bras 17 avant une remise en place dans le fourreau 16 et un verrouillage dans une position appropriée.

On peut également prévoir, figure 5, de transformer le fourreau 16 en un moyeu 23B. Le bras 17 de la roue 18 peut en effet être constitué d'un tube 17B qui présenterait l'avantage de pouvoir coulisser dans un fourreau tubulaire également et en même temps de tourner dans ce fourreau pour placer la roue alternativement en position travail ou en position intermédiaire en vue de sa position transport. Ce bras tubulaire 17B comporterait de la même façon des orifices régulièrement répartis qui serviraient au réglage du terrage de la roue 18 et à son verrouillage en position travail et en position transport.

On a représenté, figure 4, un organe élastique, en forme de ressort 36, interposé entre le bras 17 et le fourreau 16 qui est solidaire du bâti 1 et qui assure le guidage dudit bras 17. Ce ressort 36 est fixé à la partie inférieure du bras 17, de façon à soulager le poids de la roue 18 lors des manoeuvres de cette dernière.

En relation avec les figures 1 et 2 en particulier, le déroulement des opérations pour déplacer la roue de sa position travail à la position transport est le suivant. La première opération consiste à retourner la roue 18 autour de l'axe 25 du bras 17. Pour effectuer cette opération, il suffit d'ôter la cheville 26 et de faire tourner le moyeu 23 qui supporte la fusée 24 de la roue 18, de 180°. Dans cette position, la cheville 26 permet d'immobiliser le moyeu 23 par rapport au bras 17. Dans cette position, il peut être nécessaire de faire glisser le bras de roue 17 dans son fourreau 16 afin de faire passer la roue sous le volume du support 5. Cette manoeuvre est facilitée par la présence du ressort 36. Pour amener la roue de sa position intermédiaire à sa position transport, on effectue une manoeuvre de cette roue, d'un quart de tour autour de l'axe 13. Pour cela, il suffit d'ôter la cheville 22 interposée entre la platine 15 et la patte 19 qui correspond à l'orifice 35 de la figure 5 ou 6, de faire pivoter de 90° le bras 17 de la roue et la roue elle-même, toujours autour de l'axe 13, jusqu'à amener le plan médian 18P de la roue dans l'axe de pivotement 11. Dans cette position, la cheville 22 est positionnée entre la platine 15 et la patte 20 qui correspond à l'orifice 34 de la figure 5 ou 6 ; elle verrouille à nouveau la position du bras 17 par rapport à l'arbre 10. Ces différents mouvements de la roue peuvent s'effectuer lorsque la roue est en position travail. Ces mouvements s'effectuent sans effort dans le cas notamment où l'axe 13 est parallèle à l'axe 25 du bras 17. Ces mouvements s'effectuent en effet autour d'axes essentiellement verticaux. Lorsque l'axe 13 est légèrement incliné par rapport à l'axe 25 du bras 17, la phase finale de la mise en position transport de la roue implique un léger mouvement ascensionnel de cette roue. L'effort nécessaire à ce mouvement sera limité en provoquant manuellement le déverrouillage du loquet en laissant le mécanisme total s'équilibrer lui-même sur son axe de pivotement 11. Le corps 5 peut comporter une autre platine à l'arrière pour recevoir un bâti complémentaire muni d'un ou plusieurs autres corps de labour. Ce mouvement peut s'effectuer automatiquement par le basculement d'un quart de tour de la charrue en l'amenant de sa position travail à sa position normale de transport.

Le déroulement des opérations, pour déplacer la roue 18 de sa position travail à la position transport, dans le mode de réalisation représenté figures 5 à 7, est exactement le même. On réalise tout d'abord un demi-tour de la roue autour du premier axe de manoeuvre 25 puis un quart de tour du fourreau 16 autour du second axe de manoeuvre 13. On remarque, figure 5, mais ceci est également valable pour le premier mode de réalisation figure 1, que l'axe 13 est légèrement incliné vers l'avant, dans un plan perpendiculaire à l'axe de pivotement 11.

Les signes de référence insérés après les caractéristiques techniques mentionnées dans les revendications ont pour seul but de faciliter la compréhension de ces dernières et n'en limitent aucunement la portée.

## Revendications

1.- Support à roue pour charrue brabant comportant un bras (17) muni de moyens pour régler la position de la roue (18) en profondeur par rapport au bâti (1) ; ce bras (17) pivote autour d'un axe (11) monte sur ledit bâti et dispose dans son plan médian, sensiblement perpendiculaire au sens d'avancement, lequel bras (17) est verrouillé sensiblement à la verticale, pour les deux positions de travail et il est également verrouillé dans deux positions distinctes, l'une pour le travail, l'autre pour le transport, par un mouvement autour d'un axe de manoeuvre (25) de la roue, qui est, en position de travail, perpendiculaire et sécant audit axe de pivotement (11) ; caractérisé en ce qu'il comporte, interposés entre l'axe de pivotement (11) et l'axe de manoeuvre (25), des moyens de déport dudit axe de manoeuvre (25), pour l'amener, en position transport, à une distance de l'axe de pivotement (11) qui est sensiblement égale à la distance qui sépare cet axe de manoeuvre (25) du plan médian (18P) de la roue.

2.- Support à roue pour charrue brabant selon la revendication 1, caractérisé en ce qu'il comporte des moyens de déport constitues d'un second axe de manoeuvre (13) de la roue (18), qui permet un mouvement d'un quart de tour du bras (17), entre deux positions verrouillées correspondant pour l'une, à la position de travail et, pour l'autre, à la position transport.

3.- Support à roue pour charrue brabant selon la revendication 2, caractérisé en ce qu'il comporte, un second axe de manoeuvre (13) situé dans un plan perpendiculaire à l'axe de pivotement (11).

4.- Support à roue pour charrue brabant selon la revendication 2, caractérisé en ce qu'il comporte un second axe de manoeuvre (13) dont la somme des distances orthogonales qui le séparent de l'axe de pivotement (11) et du premier axe de manoeuvre (25), est égale à la distance qui sépare le plan médian (18P) de la roue, dudit premier axe de manoeuvre (25).

5.- Support à roue pour charrue brabant selon l'une quelconque des revendications 2 à 4, caractérisé en ce qu'il comporte des moyens permettant de donner une chasse à la roue (18), lesquels moyens consistent en une inclinaison du premier axe de manoeuvre (25) par rapport au second axe de manoeuvre (13).

6.- Support à roue pour charrue brabant selon la revendication 5, caractérisé en ce que la projection du premier axe de manoeuvre (25), sur le plan du deuxième axe de manoeuvre (13), plan perpendiculaire à l'axe de pivotement (11), est inclinée par rapport audit second axe (13), d'un angle compris entre 0 et 45° et de préférence 20 à 45°.

7.- Support à roue pour charrue brabant selon l'une quelconque des revendications 1 à 6, caractérisé en ce qu'il comporte des moyens de verrouillage de la roue, par rapport au bras (17), dans deux positions opposées à 180°, autour du premier axe de manoeuvre (25) ; l'une des positions correspondant à la position normale de travail avec la roue (18) située à l'extérieur du champ du support, l'autre correspondant à une position intermédiaire en vue de la mise en position transport ; la roue étant, dans cette position intermédiaire, située dans l'encombrement ou champ dudit support.

8.- Support à roue pour charrue brabant selon la revendication 7, caractérisé en ce qu'il comporte, à l'extrémité inférieure du bras (17), un moyeu (23) solidaire de la fusée (24) de la roue, articulé autour du premier axe de manoeuvre (25), lequel premier axe correspond à l'axe longitudinal dudit bras (17), ce moyeu (23) étant muni de moyens de verrouillage de sa position par rapport audit bras (17).

9.- Support à roue pour charrue brabant, selon la revendication 8, caractérisé en ce qu'il comporte un moyeu (23b) disposé au niveau de l'axe de pivotement (11) en position travail, coopérant avec un bras (17b) de forme cylindrique, centré sur le premier axe de manoeuvre (25), lequel moyeu (23b) assure le pivotement de la roue (18) autour dudit premier axe (25), et le réglage du terrage de cette roue (18) ; des moyens de verrouillage sont interposés entre ledit moyeu (23b) et le bras (17b).

10.- Support à roue pour charrue brabant, selon l'une quelconque des revendications 1 à 9, caractérisé en ce qu'il comporte, interposé entre le bras (17) et son fourreau (16) qui est solidaire du bâti (1), un organe élastique (36), en forme de ressort, qui soulage le poids de la roue (18) lors de ses manoeuvres.

## Patentansprüche

1. Kehrpflug-Radsupport, umfassend einen Arm (17), versehen mit Mitteln zum Einstellen der Tiefenposition des Rades (18) relativ zum Gestell (1), welcher Arm (17) um eine an dem Gestell montierte und in dessen Mittelebene im wesentlichen senkrecht zur Fahrtrichtung angeordnete Achse (11) schwenkt und für die beiden Arbeitspositionen im wesentlichen in der Vertikalen verriegelt ist sowie in zwei unterschiedlichen Positionen, eine für die Arbeit und eine für den Transport, durch eine Bewegung um eine Manövrierachse (25) des Rades verriegelt ist, die in der Arbeitsposition senkrecht zu der Schwenkachse (11) ist und diese schneidet, dadurch gekennzeichnet, daß er, eingefügt zwischen der Schwenkachse (11) und der Manövrierachse (25), Verlagerungsmittel der Manövrierachse (25) umfaßt, um sie in der Transportposition in einen Abstand von der Schwenkachse (11) zu bringen, der im wesentlichen gleich ist dem Abstand, der die Manövrierachse (25) von der Mittelebene (18P) des Rades trennt.

2. Kehrpflug-Radsupport nach Anspruch 1, dadurch gekennzeichnet, daß er Verlagerungsmittel umfaßt, gebildet von einer zweiten Manövrierachse (13) des Rades (18), was eine Bewegung des Armes (17) um eine Vierteldrehung zwischen zwei entsprechenden Verriegelungspositionen, eine für die Arbeitsposition und die andere für die Transportposition, ermöglicht.

3. Kehrpflug-Radsupport nach Anspruch 2, dadurch gekennzeichnet, daß er eine zweite Manövrierachse (13) in einer Ebene senkrecht zu der Schwenkachse (11) umfaßt.

4. Kehrpflug-Radsupport nach Anspruch 2, dadurch gekennzeichnet, daß er eine zweite Manövrierachse (13) umfaßt, bei der die Summe der orthogonalen Abstände, die sie von der Schwenkachse (11) und der ersten Manövrierachse (25) trennen, gleich dem Abstand ist, der die Mittelebene (18P) des Rades von der ersten Manövrierachse trennt.

5. Kehrpflug-Radsupport nach einem der Ansprüche 2 bis 4, dadurch gekennzeichnet, daß er Mittel umfaßt, die es ermöglichen, dem Rad (18) Spiel zu verleihen, welche Mittel aus einer Schrägstellung der ersten Manövrierachse (25) relativ zur zweiten Manövrierachse (13) bestehen.

6. Kehrpflug-Radsupport nach Anspruch 5, dadurch gekennzeichnet, daß daß die Projektion der ersten Manövrierachse (25) auf die zur Schwenkachse (11) senkrechte Ebene der zweiten Manövrierachse (13) relativ zur zweiten Achse (13) um einen Winkel zwischen 0 und 45° und vorzugsweise um 20 bis 45° geneigt ist.

7. Kehrpflug-Radsupport nach einem der Ansprüche 1 bis 6, dadurch gekennzeichnet, daß er Mittel zum Verriegeln des Rades relativ zum Arm (17) in zwei um 180° um die erste Manövrierachse (25) einander gegenüberliegenden Positionen umfaßt, von denen eine der normalen Arbeitsposition mit dem Rad (18) außerhalb des Supportfeldes, die andere einer Zwischenposition für das Herbeiführen der Transportposition entspricht, wobei sich das Rad in dieser Zwischenposition in der Ausladung oder dem Feld des Supports befindet.

8. Kehrpflug-Radsupport nach Anspruch 7, dadurch gekennzeichnet, daß er am unteren Ende des Arms (17) eine mit dem Achsschenkel (24) des Rades verbundene Nabe (23) aufweist, die um die erste Manövrierachse (25) schwenkbar ist, welche erste Manövrierachse (25) der Längsachse des Arms (17) entspricht, welche Nabe (23) mit Mitteln zum Verriegeln ihrer Position relativ zu dem Arm (17) versehen ist.

9. Kehrpflug-Radsupport nach Anspruch 8, dadurch gekennzeichnet, daß er eine in Höhe der Schwenkachse (11) in Arbeitsposition angeordnete Nabe (23b) umfaßt, die mit einem zylinderförmigen auf die erste Manövrierachse (25) zentrierten Arm (17b) zusammenwirkt, welche Nabe (23b) die Schwenkung des Rades (18) um diese erste Achse (25) und die Einstellung der Bodenberührung dieses Rades (18) sicherstellt, wobei Verriegelungsmittel zwischen der Nabe (23b) und dem Arm (17b) eingefügt sind.

10. Kehrpflug-Radsupport nach einem der Ansprüche 1 bis 9, dadurch gekennzeichnet, daß er eingefügt zwischen dem Arm (17) und seiner mit dem Gestell (1) verbundenen Buchse (16) ein elastisches Organ (36) in Form einer Feder umfaßt, das das Gewicht des Rades (18) während seiner Manöver entlastet.

## Claims

1. Wheel support for a turnover plough, comprising an arm (17) provided with means for adjusting the position of the wheel (18) in terms of height relative to the frame (1); this arm (17) pivots about an axis (11) mounted on the said frame and arranged in its median plane, substantially perpendicular to the direction of advance, which arm (17) is locked substantially vertically for the two working positions and is also locked in two different positions, one for working, the other for transport, by a movement about a manoeuvring axis (25) of the wheel which, in the working position, is perpendicular to and intersects the said pivoting axis (11); characterised in that it comprises, interposed between the pivoting axis (11) and the manoeuvring axis (25), means for offsetting the said manoeuvring axis (25) in order to bring it, in the transport position, to a distance from the pivoting axis (11) which is substantially equal to the distance which separates this manoeuvring axis (25) from the median plane (18P) of the wheel.

2. Wheel support for a turnover plough according to Claim 1, characterised in that it comprises offsetting means consisting of a second manoeuvring axis (13) of the wheel (18), which allowed a movement of a quarter of a revolution of the arm (17), between two locked positions, one corresponding to the working position and the other corresponding to the transport position.

3. Wheel support for a turnover plough according to Claim 2, characterised in that it comprises a second manoeuvring axis (13) located in a plane perpendicular to the pivoting axis (11).

4. Wheel support for a turnover plough according to Claim 2, characterised in that it comprises a second manoeuvring axis (13) of which the sum of the orthogonal distances which separate it from the pivoting axis (11) and from the first manoeuvring axis (25) is equal to the distance which separates the median plane (18P) of the wheel from the said first manoeuvring axis (25).

5. Wheel support for a turnover plough according to any one of Claims 2 to 4, characterised in that it comprises means which make it possible to give a clearance to the wheel (18), which means consist of tilting the first manoeuvring axis (25) relative to the second manoeuvring axis (13).

6. Wheel support for a turnover plough according to Claim 5, characterised in that the projection of the first manoeuvring axis (25) on the plane of the second manoeuvring axis (13), a plane perpendicular to the pivoting axis (11), is tilted relative to the said second axis (13) by an angle of between 0 and 45° and preferably 20 to 45°.

7. Wheel support for a turnover plough according to any one of Claims 1 to 6, characterised in that it comprises means for locking the wheel, relative to the arm (17), in two 180°-opposed positions, about the first manoeuvring axis (25); one of the positions corresponding to the normal working position with the wheel (18) located outside the field of the support, the other corresponding to an intermediate position with a view to placing in the transport position; the wheel being, in this intermediate position, located in the spacial requirement or field of the said support.

8. Wheel support for a turnover plough according to Claim 7, characterised in that it comprises, at the lower end of the arm (17), a hub (23) integral with the stub axle (24) of the wheel, articulated about the first manoeuvring axis (25), which first axis corresponds to the longitudinal axis of the said arm (17), this hub (23) being provided with means for locking its position relative to the said arm (17).

9. Wheel support for a turnover plough according to Claim 8, characterised in that it comprises a hub (23b) arranged at the level of the pivoting axis (11) in the working position, interacting with an arm (17b) of cylindrical shape, centred on the first manoeuvring axis (25), which hub (23b) ensures the pivoting of the wheel (18) about the said first axis (25) and the adjustment of the ground depth of this wheel (18); locking means are interposed between the said hub (23b) and the arm (17b).

10. Wheel support for a turnover plough according to any one of Claims 1 to 9, characterised in that it comprises, interposed between the arm (17) and its sleeve (16), which is integral with the frame (1), an elastic member (36) in the form of a spring which lightens the weight of the wheel (18) during its manoeuvres.

_fig. 1_

_fig. 2_

_fig. 4_

_fig. 5_

_fig. 6_

_fig. 7_

_fig. 3_